# EUROPEAN PATENT APPLICATION

(11) **EP 1 376 730 A1**
(43) Date of publication of application: **02.01.2004**
(21) Application number: 03076754.5
(22) Date of filing: 04.06.2003
(51) Int. Cl.: H01M 8/24, H01M 8/10, H01M 2/00

(54) **Solid-oxide fuel cell assembly having optimal numbers of cells**

(30) Priority: 24.06.2002 US 178817
(71) Applicant: Delphi Technologies, Inc., Troy Michigan 48007 (US)
(72) Inventor: Haltiner Jr., Karl J., Fairport, NY 14450 (US); Mukerjee, Subhasish, Rochester, NY 14618 (US); Keegan, Kevin R., Hilton, NY 14468 (US)
(74) Representative: Denton, Michael John

(57) **Abstract**

A solid-oxide fuel cell assembly comprising a stack of individual fuel cells for use as an auxiliary power unit in a vehicle. Each cell generates between 0.7V and 1.0 volts, depending upon load. The total output voltage of the assembly must be maintained between 42V and 48V. An assembly comprising 60 cells is optimal for automotive use, being the minimum number of cells required to provide a minimum of 42V (0.7 times 60) under high load, and requiring the minimum voltage control at low loads 1.0V times 60) to provide a maximum of 48V.

## Description

### TECHNICAL FIELD

The present invention relates to hydrogen/oxygen fuel cells having a solid-oxide electrolytic layer separating an anode layer from a cathode layer; more particularly, to fuel cell stack assemblies and systems having a plurality of fuel cells electrically connected in series; and most particularly, to such fuel cell assemblies and systems wherein the number of fuel cells is optimized to meet the SAE 42V standards under all operating conditions without requiring a voltage control device for low load conditions.

### BACKGROUND OF THE INVENTION

Fuel cells which generate electric current by the electrochemical combination of hydrogen and oxygen are well known. In one form of such a fuel cell, an anodic layer and a cathodic layer are separated by an electrolyte formed of a ceramic solid oxide. Such a fuel cell is known in the art as a "solid oxide fuel cell" (SOFC). Hydrogen, either pure or reformed from hydrocarbons, is flowed along the outer surface of the anode and diffuses into the anode. Oxygen, typically from air, is flowed along the outer surface of the cathode and diffuses into the cathode. Each O₂ molecule is split and reduced to two O⁻² anions catalytically by the cathode. The oxygen anions transport through the electrolyte and combine at the anode/electrolyte interface with four hydrogen ions to form two molecules of water. The anode and the cathode are connected externally through a load to complete the circuit whereby four electrons are transferred from the anode to the cathode. When hydrogen is derived from "reformed" hydrocarbons, the "reformate" gas includes CO which is converted to CO₂ at the anode via an oxidation process similar to that performed on the hydrogen. Reformed gasoline is a commonly used fuel in automotive fuel cell applications.

A single cell is capable of generating a relatively small voltage and wattage, typically between about 0.5 volt and about 1.0 volt, depending upon load, and less than about 2 watts per cm² of cell surface. Therefore, in practice it is usual to stack together, in electrical series, a plurality of cells. The number of cells is dictated by the total load anticipated on the stack.

Because each anode and cathode must have a free space for passage of gas over its surface, the cells are separated by perimeter spacers which are vented to permit flow of gas to the anodes and cathodes as desired but which form seals on their axial surfaces to prevent gas leakage from the sides of the stack. The perimeter spacers include dielectric layers to insulate the interconnects from each other. Adjacent cells are connected electrically by "interconnect" elements in the stack, the outer surfaces of the anodes and cathodes being electrically connected to their respective interconnects by electrical contacts disposed within the gas-flow space, typically by a metallic foam which is readily gas-permeable or by conductive filaments. The outermost, or end, interconnects of the stack define electric terminals, or "current collectors," which may be connected across a load.

A complete SOFC system typically includes auxiliary subsystems for, among other requirements, generating fuel by reforming hydrocarbons; tempering the reformate fuel and air entering the stack; providing air to the hydrocarbon reformer; providing air to the cathodes for reaction with hydrogen in the fuel cell stack; providing air for cooling the fuel cell stack; providing combustion air to an afterburner for unspent fuel exiting the stack; and providing cooling air to the afterburner and the stack. A complete SOFC assembly also includes appropriate piping and valving, as well as a programmable electronic control unit (ECU) for managing the activities of the subsystems simultaneously.

In an SOFC being supplied with fuel from a reformer, the fuel cell supply gas is provided directly from the reformer. The reforming process takes place at an elevated temperature (800°C - 1000°C) that is somewhat higher than the optimum stack operating temperature. For proper operation of the stack, it is preferable that the anode gas be at a temperature somewhat below the stack operating temperature, preferably between about 550°C and 700°C. In addition, it is preferable that the inlet temperature of cathode air be about the temperature of the anode gas.

It is a principal object of the invention to provide a fuel cell stack having an optimal number of cells for automotive uses as an auxiliary power unit (APU).

### BRIEF DESCRIPTION OF THE INVENTION

Briefly described, a solid-oxide fuel cell assembly comprising a stack of individual fuel cells is well-suited to use as an auxiliary power unit in a vehicle. The output voltage must be maintained between 42V and 48V. An assembly comprising 60 cells is optimal for automotive use, being sufficient to always provide a minimum of 42V and requiring minimal voltage control at low loads to provide a maximum of 48V.

### BRIEF DESCRIPTION OF THE DRAWINGS

These and other features and advantages of the invention will be more fully understood and appreciated from the following description of certain exemplary embodiments of the invention taken together with the accompanying drawing, in which:

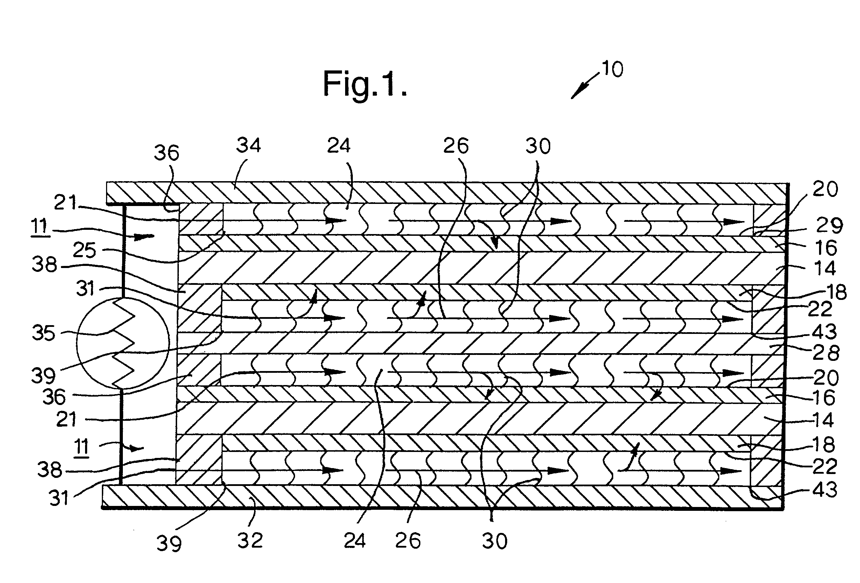

FIG. 1 is a schematic cross-sectional view of a two-cell stack of solid oxide fuel cells.

### DESCRIPTION OF THE PREFERRED EMBODIMENTS

Referring to FIG. 1, a fuel cell stack 10 includes elements known in the art of solid oxide fuel cell stacks comprising a plurality **n** of individual fuel cells. The example shown includes two identical fuel cells 11 ( **n** = 2), connected in series, and is of a class of such fuel cells said to be "anode-supported" in that the anode is a structural element having the electrolyte and cathode deposited upon it. Element thicknesses as shown are not to scale.

Each fuel cell 11 includes an electrolyte element 14 separating an anodic element 16 and a cathodic element 18. Each anode and cathode is in direct chemical contact with its respective surface of the electrolyte, and each anode and cathode has a respective free surface 20,22 forming one wall of a respective passageway 24,26 for flow of gas across the surface. Anode 16 of a first fuel cell 11 faces and is electrically connected to an interconnect 28 by filaments 30 extending across but not blocking passageway 24. Similarly, cathode 18 of a second fuel cell 11 faces and is electrically connected to interconnect 28 by filaments 30 extending across but not blocking passageway 26. Similarly, cathode 18 of the first fuel cell 11 faces and is electrically connected to a cathodic current collector 32 by filaments 30 extending across but not blocking passageway 26, and anode 16 of the second fuel cell 11 faces and is electrically connected to an anodic current collector 34 by filaments 30 extending across but not blocking passageway 24. Current collectors 32,34 may be connected across a load 35 in order that the fuel cell stack 10 performs electrical work. Passageways 24 are formed by anode spacers 36 between the perimeter of anode 16 and either interconnect 28 or anodic current collector 34. Passageways 26 are formed by cathode spacers 38 between the perimeter of electrolyte 14 and either interconnect 28 or cathodic current collector 32. Anode spacer 36 and cathode spacer 38 are formed from sheet stock in such a way to yield the desired height of the anode passageways 24 and cathode passageways 26.

Preferably, the interconnect and the current collectors are formed of an alloy, typically a "superalloy," which is chemically and dimensionally stable at the elevated temperatures necessary for fuel cell operation, generally about 750°C or higher, for example, Hastelloy, Haynes 230, or a stainless steel. The electrolyte is formed of a ceramic oxide and preferably includes zirconia stabilized with yttrium oxide (yttria), known in the art as YSZ. The cathode is formed of, for example, porous lanthanum strontium manganate or lanthanum strontium iron, and the anode is formed of, for example, a mixture of nickel and YSZ.

In operation (FIG. 1), reformate gas 21 is provided to passageways 24 at a first edge 25 of the anode free surface 20, flows parallel to the surface of the anode across the anode in a first direction, and is removed at a second and opposite edge 29 of anode surface 20. Hydrogen and CO diffuse into the anode to the interface with the electrolyte. Oxygen 31, typically in air, is provided to passageways 26 at a first edge 39 of the cathode free surface 22, flows parallel to the surface of the cathode in a second direction which can be orthogonal to the first direction of the reformate (second direction shown in the same direction as the first for clarity in FIG. 1), and is removed at a second and opposite edge 43 of cathode surface 22. Molecular oxygen gas (O₂) diffuses into the cathode and is catalytically reduced to two O⁻² ions by accepting four electrons from the cathode and the cathodic current collector 32 or the interconnect 28 via filaments 30. The electrolyte ionically conducts or transports O⁻² anions to the anode electrolyte innerface where they combine with four hydrogen atoms to form two water molecules, giving up four electrons to the anode and the anodic current collector 34 or the interconnect 28 via filaments 30. Thus cells 11 are connected in series electrically between the two current collectors, and the total voltage and wattage between the current collectors is the sum of the voltage and wattage of the individual cells in a fuel cell stack.

For most uses, fuel cell stacks must contain a substantial number **n** of cells to generate the voltage needed for practical tasks. Each cell in the stack is capable of operating in a range from about 1.0V to 0.6V, depending upon the load (current draw). The Society of Automotive Engineers' 42V standards require that an SOFC APU operate with an output voltage between 32V and 48V, allowing for ripple of up to 2V. At very low loads, the cells approach the Nerst open circuit voltage of approximately 1.0V. As the load increases, cell voltage drops until a lower limit of 0.6V is reached, below which the cell may be damaged. Therefore, if **n** exceeds 48, the stack voltage will exceed the 48V requirement under low load conditions. However, if **n** is less than 50, the output voltage will fall below the 32V requirement under high load conditions. Thus, there is no number of cells wherein the standard will be met under all operating conditions. In addition, if the electrical system includes a battery, the system voltage should not fall below 42V to enable battery charging or prevent battery discharge. It is also desirable to keep the cell voltage at or above 0.7V under most operating conditions. A lower voltage results in a substantially reduced system efficiency.

Since the voltage requirements cannot be met under all conditions, a voltage control device 44 is required in the cell circuit to maintain APU output voltage within acceptable limits independent of the stack voltage. In this case, it is then desirable to minimize the size, cost, complexity, and power loss of this device. It is much simpler to only reduce stack output voltage as required to meet requirements than it would be to reduce the voltage under some conditions and boost it under other conditions (boosting the voltage is much more complex). Therefore, the optimum number of cells is about 60, to meet the 42V stack voltage minimum when the stack is under rated load (0.7V times 60 cells = 42V). If **n** exceeds 68, then the stack voltage must be reduced under all operating conditions because the stack output voltage would exceed 48V even under high load (0.7V times 68 cells = 47.6V). If **n** is less than 68, voltage reduction is not required once the load increase sufficiently to drop the stack output voltage below 48V, and the voltage control device may be switched out, which reduces power loss. The fewer the number of cells above 60, the lower the load at which the device may be switched out. Thus, 60 cells is both the minimum number and the optimum number of cells for a fuel cell stack having cells which operate between 0.7V and 1.0V.

The actual optimum number for a fuel cell stack may not be exactly 60, for example, it may fall somewhere between 55 and 65, since the voltage characteristics of the individual cells and the stack may depend upon, among other things, the minimum operating voltage of a cell, parasitic electrical power loads in the system which always present some load, and acceptable voltage control power loss. Thus, a simple rule for determining the optimum number of cells for a fuel cell stack for automotive APU use is to first determine the minimum voltage output of a typical cell at the highest load to be encountered, and then divide that voltage value into the desired battery charging voltage (typically 42V). This will give the minimum and optimum number **n** required. All values of **n** above that will require more parasitic voltage regulation at low loads. All values of **n** below that will provide insufficient voltage at high loads.

A fuel cell assembly in accordance with the invention is especially useful as an auxiliary power unit (APU) for vehicles on which the APU may be mounted, such as cars and trucks, boats and ships, and airplanes, wherein motive power is supplied by a conventional engine and the auxiliary electrical power needs are met by a fuel cell assembly.

A fuel cell assembly in accordance with the invention is also useful as a stationary power plant such as, for example, in a household or for commercial usage.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A fuel cell assembly, comprising a plurality of individual fuel cells connected in series, the number of cells being between about 55 and about 65.

2. A fuel cell assembly in accordance with Claim 1 wherein said number of cells is 60.

3. A fuel cell assembly in accordance with Claim 1 further comprising a voltage regulator for limiting output voltage to 48 volts.

4. A fuel cell assembly in accordance with Claim 1 wherein the minimum output voltage is 42 volts.

5. A fuel cell assembly in accordance with Claim 1 wherein the number of cells equals 42 divided by the minimum output voltage of any one cell.

6. A fuel cell assembly in accordance with Claim 1 wherein said fuel cells are solid-oxide fuel cells.

7. A fuel cell assembly in accordance with Claim 1 wherein said assembly is an auxiliary power unit for a vehicle.

8. A method for determining the optimum number of fuel cells for a fuel cell assembly, comprising the steps of:
a) determining the value of the minimum voltage output of an individual cell under the highest load it will encounter; and
b) dividing said value into the battery charge voltage value to obtain said optimum number of cells.
